# DEMANDE DE BREVET EUROPEEN

(11) **EP 4 122 844 A1**
(43) Date de publication de la demande: **25.01.2023**
(21) Numéro de dépôt: 22185792.3
(22) Date de dépôt: 19.07.2022
(51) Int. Cl.: B65G 21/00, B65G 21/10, B65G 41/00, A01B 73/04, A01D 87/02

(54) **CONVOYEUR POUR LA RÉCOLTE DES PRODUITS AGRICOLES TELS QUE DES LÉGUMES, OU POUR DES PRODUITS DE LA MER**

(30) Priorité: 21.07.2021 FR 2107850
(71) Demandeur: Delecroix, 59270 Bailleul (FR)
(72) Inventeur: TOUBEAUX, Jean-François, 59270 BAILLEUL (FR); DENHAENE, Bertrand, 59270 BAILLEUL (FR)
(74) Mandataire: Cabinet Beau de Loménie

(57) **Abrégé**

L'invention concerne un convoyeur (1) pour la récolte de légumes ou pour des produits de la mer, le convoyeur (1) présentant une direction longitudinale principale et le convoyeur (1) étant repliable selon ladite direction longitudinale, le convoyeur (1) comportant une embase (2) destinée à être montée, de préférence, sur un véhicule, un bras (4) destiné à s'étendre selon la direction longitudinale et comportant plusieurs portions (6) articulées entre elles de manière à permettre au bras (4) de se déplier ou de se replier selon la direction longitudinale, une première portion (6a) étant montée sur l'embase (2), et un moyen d'acheminement monté sur le bras (4) du convoyeur.

L'embase (2) comprend un corps et un moyen de guidage mobile, le moyen de guidage mobile étant en contact, de préférence par liaison glissière, avec au moins une portion du bras (4), de préférence avec la première portion (6a) du bras, le moyen de guidage mobile étant monté coulissant en translation par rapport au corps de l'embase (2) de manière à permettre une modification de la hauteur du bras (4).

## Description

### Domaine Technique

La présente invention concerne le domaine des machines notamment agricoles, et plus particulièrement le domaine des convoyeurs utilisés lors de la récolte de produits agricoles tels que des légumes ou pour des produits de la mer, pour acheminer lesdits produits jusqu'à une remorque ou un tracteur.

### Technique antérieure

Il est connu d'utiliser des convoyeurs agricoles pour faciliter et accélérer la récolte de légumes effectuée à la main. Plus précisément, les convoyeurs agricoles sont utilisés pour permettre aux personnes effectuant la récolte des légumes de ne plus avoir à transporter, le plus souvent en les portant, les légumes ainsi récoltés jusqu'à un collecteur de légumes. Les convoyeurs agricoles permettent de récupérer les légumes au plus près de leur lieu de récolte, et de les acheminer vers le collecteur à légumes.

A cette fin, et de manière à garder la proximité entre le convoyeur agricole et les personnes effectuant la récolte, il est connu de monter le convoyeur sur un tracteur ou sur la remorque d'un tracteur se déplaçant dans le champ au même rythme que les personnes effectuant la récolte. On minimise ainsi l'intervalle de temps entre la récolte du légume et la récupération du légume par le convoyeur, c'est-à-dire la durée pendant laquelle la personne effectuant la récolte porte le légume et ne peut donc pas récolter un autre légume.

Le convoyeur peut ainsi comprendre un bras s'étendant d'une extrémité proximale jusqu'à une extrémité distale, et un moyen d'acheminement monté mobile dans le convoyeur et configuré pour circuler entre l'extrémité distale et l'extrémité proximale. Afin d'augmenter la surface de récolte et permettre à plusieurs personnes effectuant la récolte en même temps de pouvoir profiter du convoyeur, le bras présente une longueur importante tout en étant repliable afin de pouvoir être transporté et stocké lorsqu'il n'est pas utilisé.

Cependant, en raison des contraintes de compacité en configuration repliée, et de longueur en configuration dépliée, de tels convoyeurs sont généralement peu adaptables aux conditions de récoltes, notamment en termes de hauteur du bras pendant la phase de récolte.

De plus, de tels convoyeurs sont aussi limités par l'espace dont ils ont besoin pour se replier. Un tel espace, ou encombrement cinématique, doit être compatible avec les dimensions du tracteur ou de sa remorque, notamment en termes de hauteur, afin de ne pas venir en contact avec eux pendant la phase de dépliement ou de repliement. Ainsi, au-delà du volume du convoyeur en configuration repliée, c'est son encombrement cinématique qui peut limiter la longueur maximale possible d'un convoyeur, afin de le rendre compatible avec certaines dimensions de tracteur ou de remorque.

### Exposé de l'invention

La présente invention vise à résoudre les différents problèmes techniques énoncés précédemment. En particulier la présente invention vise à proposer un convoyeur notamment agricole pouvant être adapté en hauteur lors de la récolte. Par ailleurs, la présente invention vise également à proposer un convoyeur présentant une cinématique de dépliement et de repliement dans un volume imposé.

Ainsi, selon un aspect, il est proposé un convoyeur pour la récolte de produits agricoles tels que des légumes ou pour des produis de la mer. Le convoyeur présente une direction longitudinale principale et est repliable selon ladite direction longitudinale. Le convoyeur comporte : une embase, un bras et un moyen d'acheminement. L'embase est destinée à être montée, de préférence, sur un véhicule tel qu'un tracteur ou une remorque. Le bras est destiné à s'étendre selon la direction longitudinale et comporte plusieurs portions, ou caissons, articulées entre elles de manière à permettre au bras de se déplier ou de se replier selon la direction longitudinale, une première portion étant montée sur l'embase. Le moyen d'acheminement est monté sur le bras du convoyeur.

L'embase comprend un corps et un moyen de guidage mobile, le moyen de guidage mobile étant en contact, de préférence par liaison glissière, avec au moins une portion du bras, de préférence avec la première portion du bras, le moyen de guidage mobile étant monté coulissant en translation par rapport au corps de l'embase de manière à permettre une modification de la hauteur du bras.

On entend par convoyeur, un appareil permettant de transporter des produits, dans le cas présent des produits agricoles ou des produits de la mer, entre deux points, dans le cas présent entre le point de récolte et le point de collecte. Le convoyeur comprend ainsi un moyen d'acheminement, par exemple un tapis, qui peut être mis en mouvement sur le bras du convoyeur afin d'acheminer des légumes.

Le convoyeur selon la présente invention est repliable, de façon à être, en configuration repliée, compact pour être transporté et/ou stocké. En particulier, le convoyeur comprend une embase avec un moyen de guidage mobile configuré pour venir en contact avec le bras. Le moyen de guidage forme alors un support, au niveau de l'embase, pour le bras du convoyeur. Grâce à la mobilité du moyen de guidage, notamment en translation, il est devient alors possible de modifier l'inclinaison de l'extrémité proximale du bras, fixe en translation, par rapport à l'embase, et donc de modifier la hauteur du bras par rapport au sol.

Grâce à la mobilité du moyen de guidage du convoyeur selon l'invention, il devient aisé de modifier la hauteur du bras du convoyeur, d'autant plus que la mobilité du moyen de guidage s'effectue au niveau de l'embase et non au niveau du bras du convoyeur. On évite ainsi un mécanisme complexe réparti sur toute la longueur du bras et pouvant entraîner des contraintes mécaniques importantes susceptibles d'endommager ou d'altérer la pérennité du convoyeur.

Préférentiellement, le bras est monté pivotant sur l'embase, par exemple par le montage pivotant de la première portion sur l'embase.

Le convoyeur se retrouve ainsi monté sur l'embase en deux points : un point pivotant au niveau de la première portion et un point coulissant en translation avec le moyen de guidage mobile. En faisant translater le moyen de guidage mobile, on obtient alors une rotation au niveau du point pivotant avec l'embase, et donc un changement d'inclinaison de l'extrémité proximale du bras par rapport à l'embase.

Préférentiellement, la portion de bras en contact avec le moyen de guidage mobile de l'embase, et la direction de translation du moyen de guidage mobile, forment un angle entre elles dans un plan vertical comportant la direction longitudinale.

Préférentiellement, le convoyeur comprend un premier moyen d'actionnement, par exemple un vérin, monté entre le corps de l'embase et le moyen de guidage mobile afin de permettre le coulissement du moyen de guidage mobile par rapport au corps de l'embase.

Le vérin est monté par exemple horizontalement et permet de faire coulisser horizontalement le moyen de guidage mobile par rapport au corps de l'embase. Cela permet de diminuer l'inclinaison de l'extrémité proximale du bras par rapport à l'horizontal et donc d'augmenter la hauteur du bras.

Préférentiellement, les portions de bras sont articulées entre elles par des liaisons pivot s'étendant perpendiculairement à la direction longitudinale, et le bras se déplie et se replie dans la direction longitudinale par rotation des différentes portions les unes par rapport aux autres selon les liaisons pivot.

Le bras est ainsi formé de portions, ou caissons, de préférence au moins trois, qui sont configurées pour venir se replier les unes sur les autres par rotation autour de liaisons pivot. Le dépliement et le repliement s'effectue selon une cinématique d'accordéon permettant le déploiement ou le repliement des différentes portions de manière simultanée ou synchronisée.

Préférentiellement, le corps de l'embase présente une forme générale de coude avec une portion sensiblement horizontale et une portion sensiblement verticale, le bras du convoyeur étant monté sur la portion sensiblement verticale du corps de l'embase, et de préférence à l'extrémité supérieure de la portion sensiblement verticale.

La forme coudée de l'embase permet d'avoir une extrémité proximale du bras s'étendant avec un angle par rapport à l'horizontale dans la configuration dépliée du bras. Une telle inclinaison découle directement de la différence de hauteur entre le haut de la partie coudée du corps de l'embase, où se situe le point pivotant de liaison entre le bras et l'embase, et le bas du corps de l'embase, où se situe le contact entre le bras et le moyen de guidage mobile.

Préférentiellement, l'embase comprend également un moyen de déploiement du bras du convoyeur, le moyen de déploiement étant monté, par une première extrémité et par une liaison pivot, sur la portion sensiblement verticale du corps de l'embase, et étant monté, par une deuxième extrémité et par une liaison pivot, à la première portion du bras convoyeur.

Le moyen de déploiement est configuré pour limiter l'encombrement cinématique du bras, notamment en hauteur. Ainsi, grâce au moyen de déploiement, le bras peut passer d'une configuration dépliée à une configuration repliée sans dépasser une hauteur définie compatible avec le volume du tracteur ou de la remorque sur laquelle il est monté.

Préférentiellement, la portion sensiblement verticale du corps de l'embase comporte également un deuxième moyen d'actionnement, par exemple un vérin, pour faire passer le moyen de déploiement d'une configuration repliée dans laquelle le moyen de déploiement s'étend sensiblement parallèlement à la portion sensiblement verticale, à une configuration dépliée dans laquelle le moyen de déploiement s'étend sensiblement parallèlement à la portion sensiblement horizontale.

Le moyen de déploiement est également motorisé afin d'avoir un actionnement du moyen de déploiement synchronisé sur l'actionnement des portions du bras. Cela permet de déplier ou replier le moyen de déploiement au moment opportun par rapport aux phases de déploiement ou repliement des portions du bras, afin d'avoir l'encombrement cinématique réduit souhaité.

Préférentiellement, le deuxième moyen d'actionnement est configuré pour positionner le moyen de déploiement entre la configuration dépliée et la configuration repliée, de manière à permettre une modification de la hauteur du bras.

En effet, en faisant tourner le moyen de déploiement par rapport à la configuration dépliée par exemple, il est possible de baisser l'extrémité de la première portion du bras qui est reliée audit moyen de déploiement. On obtient alors une rotation de la première portion, induisant une montée du bras déployé. Le positionnement du moyen de déploiement permet donc d'amplifier, si on le souhaite, l'ajustement en hauteur du bras, en venant également agir directement sur l'inclinaison de la première portion de bras.

Préférentiellement, dans la configuration repliée, le moyen de déploiement s'étend le long de la portion sensiblement verticale du corps de l'embase.

Le positionnement du moyen de déploiement, en configuration repliée, parallèlement à la portion sensiblement verticale du corps de l'embase permet de positionner la première portion du bras, celle montée pivotante sur l'embase, sensiblement horizontalement au-dessus de l'embase afin d'en limiter l'encombrement en hauteur.

Préférentiellement, l'embase comprend également un support destiné à être monté sur le véhicule, de préférence de manière coulissante ou de manière solidaire, et le corps de l'embase est configuré pour coulisser par translation par rapport au support, par exemple via un troisième moyen d'actionnement.

En plus de la mobilité des portions du bras et du moyen de déploiement, l'embase peut également comprendre un support dans lequel le corps est monté mobile. Cela permet d'augmenter la longueur de déploiement du bras par rapport au véhicule sur lequel le convoyeur est monté. Cela permet également de faire rentrer le convoyeur, en configuration repliée, dans le véhicule pour le transport notamment.

Préférentiellement, le convoyeur comprend également un système de déploiement automatique, par exemple comportant des moyens hydrauliques coopérant avec un ensemble de bielles, configuré pour déplier ou replier, selon la direction longitudinale, au moins deux portions articulées du bras, et préférence toutes les portions du bras sauf la dernière.

L'utilisation de bielles permet de transmettre la cinématique de déploiement de moyens hydrauliques sur plusieurs portions du bras. On limite ainsi le nombre de moyens hydrauliques montés sur le bras, et on facilite la fabrication du convoyeur. Les moyens hydrauliques peuvent alors déplier ou replier de manière simultanée différentes portions du bras et ainsi faciliter la commande du déploiement et du repliement du convoyeur par l'utilisateur qui n'a plus qu'une seule commande à actionner : celle des moyens hydrauliques. Une dernière portion, plus légère et compacte que les autres, peut ensuite être dépliée à la main par l'utilisateur.

### Brève description des dessins

[Fig. 1] La figure 1 représente, en perspective, un convoyeur selon la présente invention en configuration dépliée ;
[Fig. 2] La figure 2 représente, en perspective, le convoyeur de la figure 1 en configuration repliée ;
[Fig. 3] La figure 3 représente, en perspective, l'embase du convoyeur de la figure 1, en configuration dépliée du convoyeur ;
[Fig. 4] La figure 4 représente, en perspective, l'embase du convoyeur de la figure 1, en configuration repliée du convoyeur ;
[Fig. 5] La figure 5 représente, en coupe, l'embase du convoyeur de la figure 1, en configuration dépliée du convoyeur ; et
[Fig. 6] La figure 6 représente, en coupe, l'embase du convoyeur de la figure 1, en configuration repliée du convoyeur.

### Description des modes de réalisation

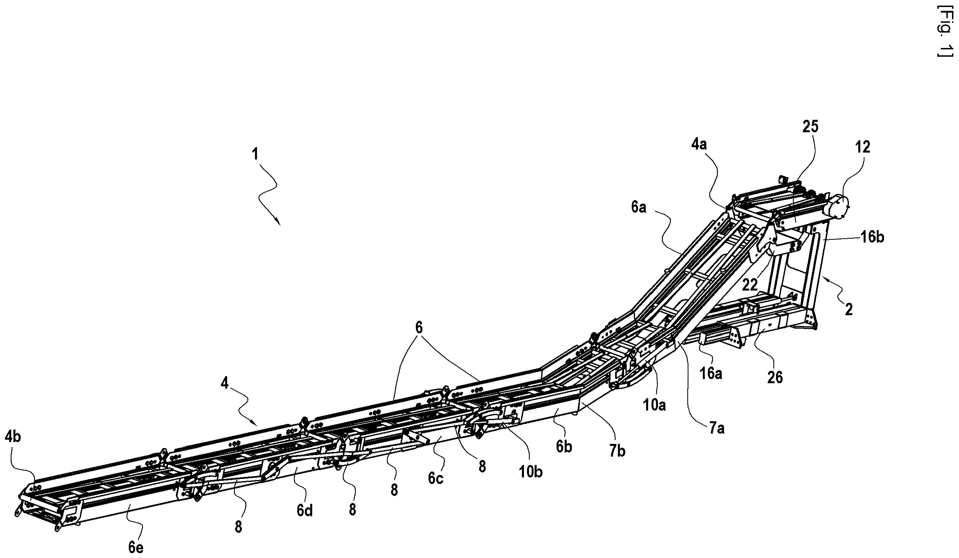

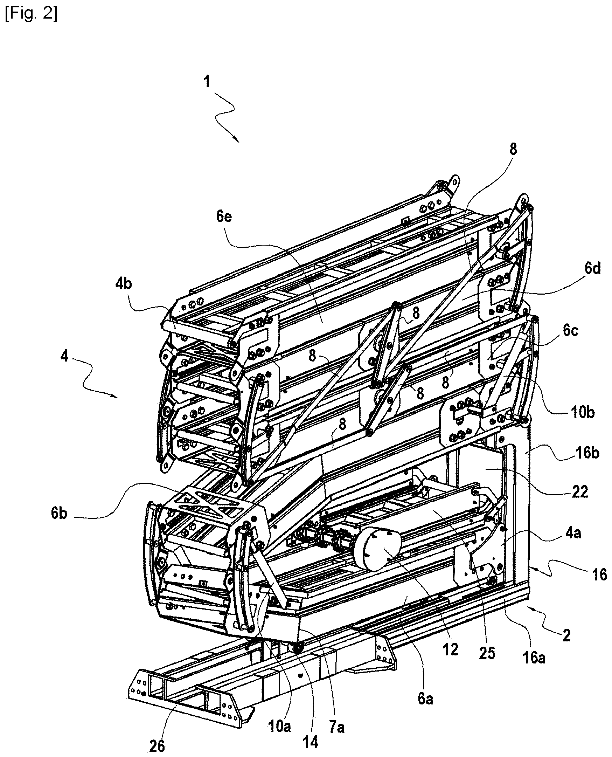

Sur les figures 1 et 2, on a représenté en perspective un convoyeur 1 de produits agricoles tels que des légumes ou de produits de la mer, selon la présente invention, en configuration dépliée et en configuration repliée. Le convoyeur 1 est destiné à acheminer des produits agricoles tout juste récoltés ou des produits de la mer, jusqu'à un collecteur situé à proximité de l'embase du convoyeur, dans un tracteur ou dans une remorque de tracteur (non représentés).

Le convoyeur 1 comporte ainsi une embase 2 et un bras 4, et présente, dans la configuration dépliée, une direction longitudinale principale selon laquelle le convoyeur 1 est repliable.

Ainsi, le bras 4 s'étend, lorsque le convoyeur 1 est en configuration dépliée, selon la direction longitudinale principale du convoyeur 1, d'une extrémité proximale 4a au niveau de laquelle le bras 4 est monté sur l'embase 2, jusqu'à une extrémité distale 4b. Le bras 4 offre une longueur, en configuration dépliée, le long de laquelle les personnes récoltant les légumes peuvent poser les légumes récoltés pour que ceux-ci puissent être acheminés jusqu'à un collecteur (non représenté) disposé à proximité de l'embase 2 du convoyeur 1.

Le bras 4 est formé de plusieurs portions 6, de préférence au moins trois, articulées entre elles, par exemple par des liaisons pivot, pour pouvoir se déplier et se replier les unes par rapport aux autres. Dans le cas illustré sur les figures 1 et 2, le convoyeur 1 comporte cinq portions 6a, 6b, 6c, 6d et 6e. La première portion 6a est celle située du côté de l'extrémité proximale 4a du bras 4, c'est-à-dire du côté de l'embase 2, tandis que la dernière portion 6e est celle située du côté de l'extrémité distale 4b du bras 4. Certaines portions 6 sont reliées entre elles par un ensemble de bielles 8 configuré pour déplier ou replier les portions 6 autour des articulations de manière simultanée, à l'aide d'un ou plusieurs moyens d'actionnement, par exemple des vérins hydrauliques. Ainsi, dans le cas présent, un premier vérin hydraulique 10a est prévu entre les première et deuxième portions 6a et 6b pour déplier ou replier la deuxième portion 6b par rapport à la première portion 6a, tandis que les portions 6c, 6d et 6e peuvent être dépliées ou repliées à l'aide de l'ensemble de bielles 8 et d'un seul moyen d'actionnement : un deuxième vérin hydraulique 10b monté au niveau de l'articulation entre la deuxième portion 6b et la troisième portion 6c. On obtient alors un système de déploiement automatique permettant de déplier ou replier les différentes portions 6a à 6e du bras 4.

Le bras 4 comporte également un moyen d'acheminement, dans le cas présent un tapis (non représenté), qui forme une boucle fermée et qui est monté sur les portions 6, de préférence autour de la partie centrale des portions 6. C'est le moyen d'acheminement qui est mis en mouvement lors de la récolte, notamment par un moteur 12, et qui permet de déplacer les légumes le long du convoyeur 1. Le moteur 12 peut être disposé par exemple au niveau de l'embase 2, sur une partie stable du convoyeur 1 capable de supporter le poids du moteur 12 sans induire des contraintes trop importantes dans la structure du convoyeur 1.

Le moyen d'acheminement est souple pour pouvoir être replié au niveau de l'extrémité distale 4b du bras 4 et au niveau de l'embase 2. Par ailleurs, le moyen d'acheminement peut également comprendre des moyens de retenue, par exemple des parois verticales, permettant de maintenir les légumes pendant leur déplacement et éviter leur glissement, notamment lorsque le moyen d'acheminement remonte vers l'embase 2. De préférence, le moyen d'acheminement est un tapis, ou bande, entraîné sans glissement, par exemple entraîné par des pignons. L'entraînement sans glissement du tapis permet, contrairement à un entraînement par frottement, de prévoir une longueur de tapis plus longue que celle du bras sans compromettre l'entraînement de celui-ci. On limite ainsi les tensions dans le tapis, notamment lors d'un ajustement ou d'un changement de hauteur du bras du convoyeur lors duquel la longueur peut être amenée à varier légèrement.

Les première et deuxième portions 6a et 6b sont des portions comportant une partie coudée 7a, 7b destinées à compenser la différence de hauteur entre le haut de l'embase 2 sur laquelle est montée l'extrémité proximale 4a du bras 4 et qui est située sur le véhicule, et les autres portions 6c, 6d et 6e du bras 4 qui sont sensiblement planes et s'étendent sensiblement parallèlement au sol afin de former principalement la partie au niveau de laquelle les légumes sont posés sur le convoyeur 1.

Afin de stabiliser le bras 4, le bras 4 est maintenu en deux points distants sur l'embase 2 : à l'extrémité proximale 4a et en un point d'appui 14 de l'embase 2. Plus particulièrement, l'extrémité proximale 4a est montée par une liaison pivot sur l'embase 2. Par ailleurs, le point d'appui 14 peut être une liaison glissière, qui sera décrit plus bas, entre une portion 6 du bras 4, dans le cas présent la première portion 6a, et l'embase 2.

L'embase 2 est destinée à être montée sur un véhicule tel qu'un tracteur ou une remorque de tracteur, afin d'y maintenir le convoyeur 1. L'embase 2 comporte un corps 16 présentant une forme générale coudée avec une portion 16a sensiblement horizontale et une portion 16b sensiblement verticale. La portion verticale 16b est destinée à permettre le montage de l'extrémité proximale 4a du bras 4, tandis que la portion horizontale 16a permet un positionnement stable sur le véhicule.

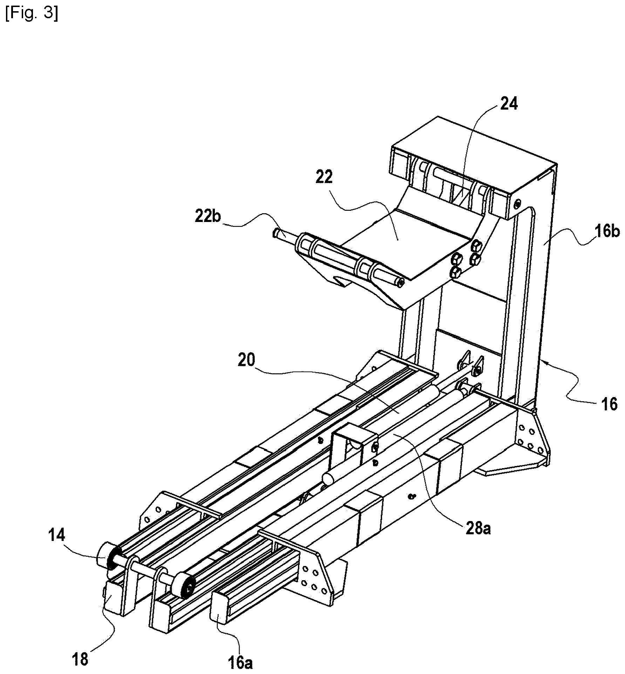

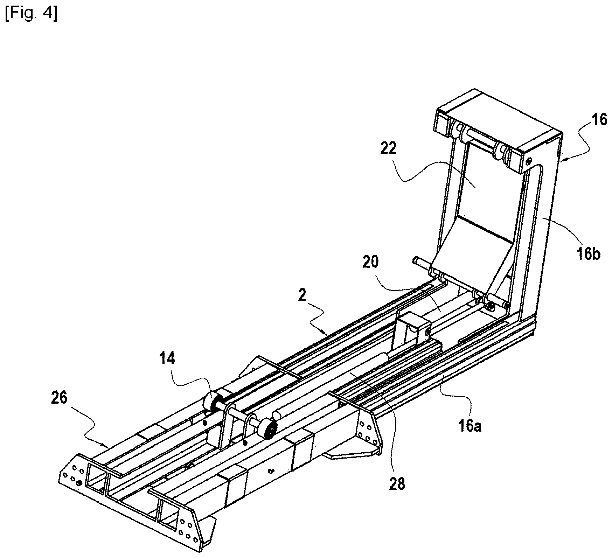

L'embase 2 comprend également un moyen de guidage mobile 18 (voir figures 3 et 4). Le moyen de guidage mobile 18 comporte le point d'appui 14 sur lequel s'appuie le bras 4, par exemple des galets rotatifs sur lesquels peut coulisser la surface inférieure de la première portion 6a du bras 4. Le moyen de guidage mobile 18 est monté coulissant en translation par rapport au corps 16 de l'embase 2, et plus précisément par rapport à la portion horizontale 16a du corps 16. Ainsi, le moyen de guidage mobile 18 peut comprendre une portion horizontale configurée pour coulisser dans la portion horizontale 16a du corps 16, de manière à pouvoir s'éloigner ou se rapprocher de la portion verticale 16b du corps 16. A cet effet, l'embase 2 peut comprendre un premier moyen d'actionnement 20, par exemple un vérin, monté entre le corps 16 et le moyen de guidage 18, afin de translater le moyen de guidage mobile 18 horizontalement par rapport au corps 16.

La première portion 6a du bras 4 est ainsi supportée d'une part au niveau de l'extrémité supérieure de la portion verticale 16b du corps 16, et d'autre part par le point d'appui 14 du moyen de guidage mobile 18. La première portion 6a du bras 4 est donc inclinée par rapport à l'horizontale, c'est-à-dire par rapport à la direction de translation du moyen de guidage mobile 18, dans un plan vertical comportant la direction longitudinale du bras 4. Ainsi, par translation horizontale du moyen de guidage mobile 18, il devient possible, via le point d'appui 14, de modifier l'inclinaison de la première portion 6a du bras 4 par rapport à l'horizontale. Comme le reste du bras 4 est monté sur l'embase 2 via la première portion 6a, en modifiant l'inclinaison de la première portion 6a, on peut alors modifier la hauteur des portions 6b, 6c, 6d et 6e du bras 4.

Grâce au moyen de guidage mobile 18, il devient alors facile de modifier la hauteur du bras 4 du convoyeur 1, afin de l'adapter au travail des personnes effectuant la récolte. De plus, le moyen de réglage de la hauteur est entièrement intégré dans l'embase 2 et n'augmente donc pas l'encombrement du bras 4 qui reste dépliable et repliable.

L'embase 2 comporte également un moyen de déploiement 22 destiné à limiter l'encombrement cinématique du bras 4 lors du déploiement ou repliement, notamment par rapport au véhicule sur lequel est monté le convoyeur 1. Comme illustré sur les figures 3 à 6, le moyen de déploiement 22 présente une forme générale de plaque et est monté par une première extrémité 22a à l'extrémité supérieure de la portion verticale 16b du corps 16, et par une deuxième extrémité 22b à la première portion 6a du bras 4, c'est-à-dire à l'extrémité proximale 4a du bras 4.

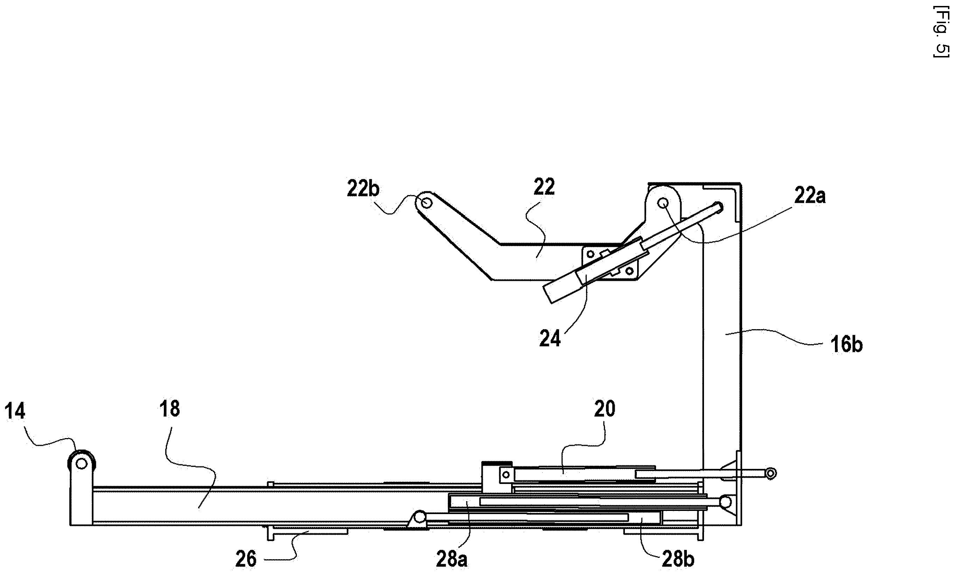

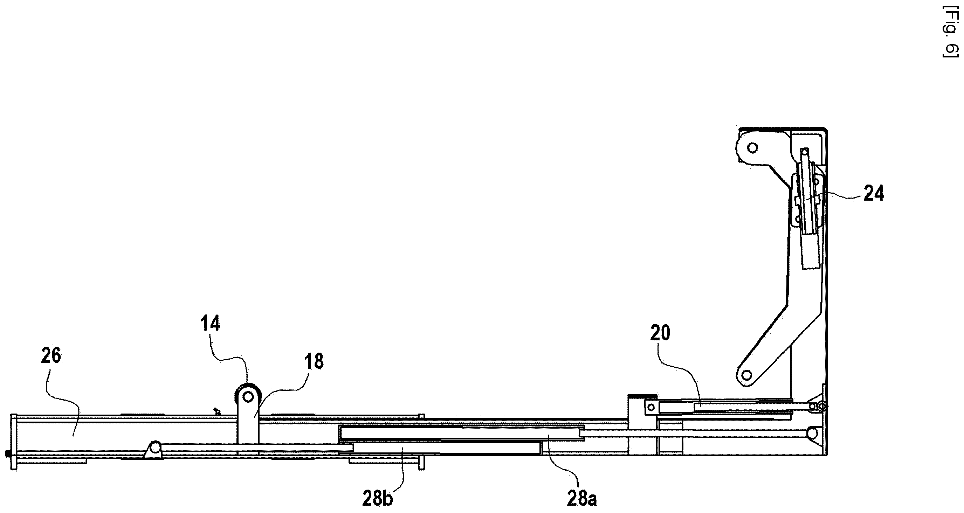

La première extrémité 22a est montée par une liaison pivot sur la portion verticale 16b de manière à pouvoir passer d'une configuration verticale (voir figures 4 et 6) dans laquelle le moyen de déploiement 22 s'étend sensiblement le long de la portion verticale 16b et qui correspond à la configuration dans laquelle le bras 4 est replié, à une configuration horizontale (voir figures 3 et 5) dans laquelle le moyen de déploiement 22 s'étend sensiblement parallèlement à la portion horizontale 16a et qui correspond à la configuration dans laquelle le bras 4 est déplié.

La deuxième extrémité 22b est reliée par une liaison pivot à la première portion 6a du bras 4, de manière à pouvoir éloigner ou au contraire rapprocher ledit bras 4 du corps 16 de l'embase 2. Plus précisément, afin de permettre un déploiement du bras 4 en-dehors du véhicule, et notamment d'une remorque, le moyen de déploiement 22 est configuré, dans la configuration horizontale, pour éloigner l'extrémité proximale 4a du bras 4, en configuration repliée, du corps 16 de l'embase 2, et donc faire pivoter l'ensemble du bras 4, en configuration repliée. Une telle rotation du bras 4, en configuration replié, permet notamment de faire sortir l'extrémité haute dudit bras 4, en configuration replié, en-dehors du véhicule. Une fois le bras 4, en configuration repliée, au moins partiellement sorti du véhicule, il devient alors plus aisé, dans un deuxième temps, de le déplier sans venir buter sur une partie dudit véhicule, en particulier sur une partie supérieure dudit véhicule.

Par ailleurs, lorsque le bras 4 est déplié, le moyen de déploiement 22 peut également être tourné afin de modifier la hauteur du bras 4. En effet, en faisant tourner le moyen de déploiement 22 de manière à baisser ou monter la deuxième extrémité 22b, il est alors possible de baisser ou monter également une extrémité de la première portion 6a du bras 4, tandis que la partie coudée 7a opposée de la première portion 6a reste sensiblement à la même hauteur. On obtient donc rotation de la première portion 6a induisant une montée ou une descente du bras 4 déployé.

A l'inverse, lors du repliement du bras 4, le moyen de déploiement 22 reste en configuration horizontale jusqu'à ce que le bras 4 soit en configuration repliée, puis le moyen de déploiement 22 passe en configuration verticale afin de faire complètement rentrer le bras 4 dans le véhicule.

A cet effet, l'embase 2 comprend un deuxième moyen d'actionnement 24, par exemple un vérin, pour faire passer le moyen de déploiement 22 de la configuration verticale à la configuration horizontale, et inversement. Le deuxième moyen d'actionnement 24 peut ainsi être monté entre la portion verticale 16b et le moyen de déploiement 22, par exemple entre l'extrémité supérieure de la portion verticale 16b et le moyen de déploiement 22.

Afin d'acheminer les produits agricoles jusqu'à l'extrémité supérieure de la portion verticale 16b, malgré la présence du moyen de déploiement 22, le convoyeur 1 comprend également un module d'extrémité 25 monté, par une liaison pivot, à la deuxième extrémité du moyen de déploiement 22, dans la continuité de la première portion 6a du bras 4. Le module d'extrémité 25 s'étend depuis l'extrémité proximale 4a du bras 4 et repose sur la portion verticale 16b du corps 16. Le module d'extrémité 25 forme ainsi une zone de déchargement des produits agricoles acheminés par le bras 4. Le moyen d'acheminement s'étend également autour du module d'extrémité 25 qui peut alors comprendre le moteur 12 d'entraînement du moyen d'acheminement.

Dans la configuration repliée du bras 4, le module d'extrémité est configuré pour venir se positionner entre les première et deuxième portions 6a, 6b du bras 4 qui laissent un espace entre elles en raison des parties coudées 7a et 7b. Le module d'extrémité 25 ne réduit donc pas la compacité du convoyeur 1 en configuration repliée, et permet de créer une liaison entre le bras 4 et l'embase 2 au niveau du déchargement des produits agricoles.

Afin de pouvoir translater horizontalement le convoyeur 1 dans le véhicule selon la direction longitudinale du bras 4, il est également possible de prévoir une embase 2 avec un support 26. Le support 26 est destiné à être fixé au véhicule et le corps 16 de l'embase 2 est monté en translation dans le support 26 selon la direction longitudinale du bras 4. L'embase 2 peut alors comporter un troisième moyen d'actionnement, par exemple des vérins 28a et 28b, monté entre le corps 16 de l'embase 2 et le support 26 de l'embase 2, afin de permettre la translation du corps 16 selon la direction longitudinale du bras 4.

Il est alors possible de déplacer dans le véhicule, le convoyeur 1 de manière à ce qu'il puisse être totalement à l'intérieur du véhicule, en configuration repliée, pour le transport, tout en permettant de l'utiliser complètement en-dehors du véhicule, en configuration dépliée.

Ainsi, grâce au convoyeur selon l'invention, il devient possible d'adapter facilement la position du bras par rapport au sol, afin d'améliorer les conditions de travail des personnes effectuant la récolte. Il devient également possible de modifier facilement la position de l'embase par rapport au véhicule, de manière à permettre un repliement correct du bras et son positionnement, dans la configuration repliée, dans le véhicule, sans pour autant perdre en longueur de travail dans la configuration dépliée. On peut ainsi augmenter la longueur du convoyeur tout en gardant une compacité compatible avec les dimensions du véhicule, ce qui permet d'effectuer des récoltes sur une surface plus étendue.

## Revendications

1. Convoyeur (1) pour la récolte de produits agricoles tels que des légumes, ou de produits de la mer, le convoyeur (1) présentant une direction longitudinale principale et le convoyeur étant repliable selon ladite direction longitudinale, le convoyeur comportant une embase (2) destinée à être montée, de préférence, sur un véhicule, un bras (4) destiné à s'étendre selon la direction longitudinale et comportant plusieurs portions (6) articulées entre elles de manière à permettre au bras (4) de se déplier ou de se replier selon la direction longitudinale, une première portion (6a) étant montée sur l'embase (2), et un moyen d'acheminement monté sur le bras (4) du convoyeur,
dans lequel l'embase (2) comprend un corps (16) et un moyen de guidage mobile (18), le moyen de guidage mobile (18) étant en contact, de préférence par liaison glissière (14), avec au moins une portion du bras (4), de préférence avec la première portion (6a) du bras, le moyen de guidage mobile (18) étant monté coulissant en translation par rapport au corps (16) de l'embase de manière à permettre une modification de la hauteur du bras (4).

2. Convoyeur (1) selon la revendication 1, dans lequel le bras (4) est monté pivotant sur l'embase, par exemple par le montage pivotant de la première portion (6a) sur l'embase.

3. Convoyeur (1) selon la revendication 1 ou 2, dans lequel la portion de bras (6) en contact avec le moyen de guidage mobile (18) de l'embase, et la direction de translation du moyen de guidage mobile, forment un angle entre elles dans un plan vertical comportant la direction longitudinale.

4. Convoyeur (1) selon l'une quelconque des revendications précédentes, comprenant un premier moyen d'actionnement (20), par exemple un vérin, monté entre le corps (16) de l'embase et le moyen de guidage mobile (18) afin de permettre le coulissement du moyen de guidage mobile (18) par rapport au corps (16) de l'embase.

5. Convoyeur (1) selon l'une quelconque des revendications précédentes, dans lequel les portions de bras (6a, 6b, 6c, 6d, 6e) sont articulées entre elles par des liaisons pivot s'étendant perpendiculairement à la direction longitudinale, et dans lequel le bras (4) se déplie et se replie dans la direction longitudinale par rotation des différentes portions les unes par rapport aux autres selon les liaisons pivot.

6. Convoyeur (1) selon l'une quelconque des revendications précédentes, dans lequel le corps (16) de l'embase présente une forme générale de coude avec une portion sensiblement horizontale (16a) et une portion sensiblement verticale (16b), le bras (4) du convoyeur étant monté sur la portion sensiblement verticale (16b) du corps de l'embase, et de préférence à l'extrémité supérieure de la portion sensiblement verticale (16b).

7. Convoyeur (1) selon la revendication précédente, dans lequel l'embase (2) comprend également un moyen de déploiement (22) du bras du convoyeur, le moyen de déploiement (22) étant monté, par une première extrémité (22a) et par une liaison pivot, sur la portion sensiblement verticale (16b) du corps de l'embase, et étant monté, par une deuxième extrémité (22b) et par une liaison pivot, à la première portion (6a) du bras (4) convoyeur.

8. Convoyeur (1) selon la revendication précédente, dans lequel la portion sensiblement verticale (16b) du corps de l'embase comporte également un deuxième moyen d'actionnement (24), par exemple un vérin, pour faire passer le moyen de déploiement (22) d'une configuration repliée dans laquelle le moyen de déploiement (22) s'étend sensiblement parallèlement à la portion sensiblement verticale (16b), à une configuration dépliée dans laquelle le moyen de déploiement (22) s'étend sensiblement parallèlement à la portion sensiblement horizontale (16a).

9. Convoyeur (1) selon la revendication précédente, dans lequel le deuxième moyen d'actionnement (24) est configuré pour positionner le moyen de déploiement (22) entre la configuration dépliée et la configuration repliée, de manière à permettre une modification de la hauteur du bras (4).

10. Convoyeur (1) selon la revendication 8 ou 9, dans lequel, dans la configuration repliée, le moyen de déploiement (22) s'étend le long de la portion sensiblement verticale (16b) du corps de l'embase.

11. Convoyeur (1) selon l'une quelconque des revendications précédentes, dans lequel l'embase (2) comprend également un support (26) destiné à être monté sur le véhicule, de préférence de manière coulissante ou de manière solidaire, et dans lequel le corps (16) de l'embase est configuré pour coulisser par translation par rapport au support (26), par exemple via un troisième moyen d'actionnement (28a, 28b).

12. Convoyeur (1) selon l'une quelconque des revendications précédentes, comprenant également un système de déploiement automatique, par exemple comportant des moyens hydrauliques (10a, 10b) coopérant avec un ensemble de bielles (8), configuré pour déplier ou replier, selon la direction longitudinale, au moins deux portions articulées du bras, et préférence toutes les portions du bras sauf la dernière.
